# FASCICULE DE BREVET EUROPEEN

(11) **EP 2 377 343 B1**
(45) Date de publication et mention de la délivrance du brevet: **06.02.2019**
(21) Numéro de dépôt: 09802185.0
(22) Date de dépôt: 16.12.2009
(51) Int. Cl.: H04W 24/02, H04W 84/04

(54) **PROCEDE ET DISPOSITIF DE CONFIGURATION D'UNE PLURALITE DE POINTS D'ACCES D'UN RESEAU LOCAL CELLULAIRE**
VERFAHREN UND EINRICHTUNG ZUM KONFIGURIEREN MEHRERER ZUGANGSPUNKTE FÜR EIN LOKALES ZELLULARNETZ
METHOD AND DEVICE FOR CONFIGURING A PLURALITY OF ACCESS POINTS FOR A LOCAL CELLULAR NETWORK

(30) Priorité: 18.12.2008 FR 0858799
(43) Date de publication de la demande: 19.10.2011
(73) Titulaire: Orange, 75015 Paris (FR)
(72) Inventeur: GALET, Olivier, F-22450 Coatreven (FR); ZOUAOUI, Rida, F-92230 Gennevilliers (FR)
(74) Mandataire: Cabinet Beau de Loménie
(86) Numéro de dépôt international: PCT/FR2009/052556
(87) Numéro de publication internationale: WO 2010/076495

(56) Documents cités:
- EP-A1- 2 309 791
- WO-A-2007/040454
- JP-A- 2008 124 575
- US-A1- 2008 298 275
- ZHIYONG FENG ET AL: "MAC 24-4 - Research on Neighboring APs Discovery Methods in PnP WLAN" WIRELESS COMMUNICATIONS AND NETWORKING CONFERENCE, 2008. WCNC 2008. IEEE, IEEE, PISCATAWAY, NJ, USA, 31 mars 2008 (2008-03-31), pages 1979-1984, XP031243937 ISBN: 978-1-4244-1997-5
- ZENGJIE KOU FENG YANG HUAIYUAN MA: "Update to OSPF Hello procedure; draft-kou-ospf-immediately-replying-h ello-02.txt" IETF STANDARD-WORKING-DRAFT, INTERNET ENGINEERING TASK FORCE, IETF, CH, no. 2, 18 janvier 2007 (2007-01-18), XP015050092 ISSN: 0000-0004
- JENN-HWAN TAMG ET AL: "A Radio-Link Stability-based Routing Protocol for Mobile Ad Hoc Networks" SYSTEMS, MAN AND CYBERNETICS, 2006. ICSMC '06. IEEE INTERNATIONAL CONF ERENCE ON, IEEE, PI, 1 octobre 2006 (2006-10-01), pages 3697-3701, XP031117525 ISBN: 978-1-4244-0099-7

## Description

La présente invention se rapporte au domaine des télécommunications.

Plus précisément, l'invention concerne la convergence fixe-mobile, notamment dans des environnements de communication bénéficiant d'une couverture limitée, voire inexistante, comme par exemple un parking sous-terrain. L'invention peut également s'appliquer dans des réseaux macro pour limiter les coûts associés aux communications mobiles.

On connaît des techniques de convergence fixe-mobile de l'art antérieur la technologie "cellule femto", communément dénommée "femtocell" en anglais.

A titre de simple remarque d'information, "femto" est un préfixe d'unité de mesure, signifiant un millionième de milliardième.

La technologie "cellule femto" consiste à fournir une interface radio mobile 2G (GSM/GPRS/EDGE) ou 3G (UMTS/HSPA) à partir d'un boîtier dénommé "point d'accès femto" (ou femto-AP, en anglais). Le point d'accès femto est relié au réseau mobile traditionnel grâce à un concentrateur femto (ou "femto-aggregator") au travers d'un tunnel sécurisé, typiquement un tunnel IPSec.

Un Point d'Accès femto est généralement connecté physiquement à un réseau local (LAN - pour Local Area Network" en anglais) par l'intermédiaire d'un dispositif d'accès au réseau fixe, par exemple une LiveBox (marque déposée) d'Orange (marque déposée), lequel fournit un accès Internet.

A titre de remarque préalable, on peut noter qu'il existe de nombreux synonymes de "Point d'Accès femto" dans la littérature ou dans la presse, notamment anglo-saxonne : "Home base station" pour station de base, "2G or 3G home gateway" pour passerelle d'accès 2G ou 3G, "Access Point Base Station", "Home NodeB" ou "Home eNodeB".
Ce dernier est le terme utilisé au 3GPP dans le cadre de la normalisation LTE ("Long Terme Evolution" pour évolution à long terme). Le terme "eNodeB" désigne une station de base conventionnelle dans les réseaux LTE.

En comparaison à d'autres solutions autorisant une convergence entre réseaux fixe et mobile, généralement basée sur la technologie Wi-Fi, la technologie "cellule femto" a pour avantage de s'appuyer sur une seule et même technologie au niveau du réseau "macro" (réseau LAN mobile extérieur habituel) et au niveau de la "cellule femto".

Elle permet ainsi d'utiliser des terminaux mobiles 2G ou 3G standards et non pas des terminaux spécifiques, mixtes : mobiles et Wi-Fi (WiFi-UMA (pour "Unified Mobile Access" ou WiFi-SIP - pour "Session Initiation Protocol").

De plus, l'utilisation d'une technologie radio basée sur des fréquences à licence détenues par un opérateur mobile, permet de s'affranchir des problèmes d'interférences inter-systèmes et intra-systèmes que l'on rencontre généralement dans des bandes de fréquences non couvertes par de telles licences.
A titre de simple exemple illustratif de ce qui précède, la technologie Wi-Fi est sous couvert de la norme IEEE 802.11, la technologie Bluetooth sous couvert de la norme IEEE 802.15.1, la technologie Zigbee sous couvert de la norme IEEE 802.15.4, etc., alors qu'un four à micro-ondes, etc. émet des ondes dans la bande des 2,4 GHz, laquelle n'est couverte par aucune licence.

Un point d'accès femto possède la spécificité d'être un équipement "plug-and-play" installé par l'utilisateur final.

Aussi, pour des raisons de santé et de sécurité des personnes, la puissance rayonnée par l'émetteur radio a été volontairement limitée, typiquement à 100 mW soit 20 dBm, de façon à permettre une utilisation du point d'accès femto à seulement quelques centimètres d'un individu, sans qu'il y ait de risque pour celui-ci.

Une contrepartie de cette limitation volontaire de la puissance d'émission se traduit sous la forme d'un inconvénient caractérisé par une réduction notable de la couverture réseau et de la capacité des cellules femto (encore dénommé de façon indifférente point d'accès femto).

Un autre inconvénient associé à l'usage d'une pluralité de points d'accès femto, dans des zones denses nécessitant le déploiement d'un grand nombre de points d'accès femto, pour couvrir une zone prédéterminée, est lié à l'importance des interférences qui apparaissent à l'intersection des différentes zones de couverture propre de chaque cellule femto installée.

Quelle que soit la technologie - 2G ou 3G - les interférences entre cellules femto constituent donc un réel problème pour des déploiements de réseaux dédiés à base de cellules femto, en zone dense.

Le seul véritable moyen de limiter les interférences consiste donc à adapter le niveau d'émission des points d'accès femto pour éviter tout recouvrement de couverture entre les cellules femto appartenant à un même réseau, et ainsi trouver un compromis acceptable entre couverture optimale et interférences minimales.
La contrepartie d'une telle approche implique de réduire encore un peu plus la puissance d'émission de chacune des cellules femto, pourtant déjà fortement limitée, pour ne pas interférer avec les autres points d'accès femto environnants d'un même réseau.
Au final, la couverture sera nécessairement réduite (pour les systèmes 2G et 3G) et la capacité également pour les systèmes UMTS.

Le document de Zhiyong Feng et Al, référencé « MAC 24-4 - Research on Neighboring APs Discovery Methods in PnP WLAN», WIRELESS COMMUNICATIONS AND NETWORKING CONFERENCE, 2008, WCNC 2008, IEEE, IEEE, PISCATAWAY, NJ, USA, 31 mars 2008, pages 1979-1984, décrit une méthode de configuration automatique de points d'accès dans un réseau local sans fil.

Le document JP 2008 124575 décrit un procédé d'installation d'une station de base d'un système de communications.

Afin de garantir un certain niveau de qualité de service et une couverture réseau inter-cellules femto qui ait un intérêt en termes d'usage, dans l'objectif de palier les inconvénients précités, les inventeurs proposent de mettre un oeuvre un mécanisme de "handover" entre les cellules femto participant à la couverture réseau d'une même zone prédéterminée, par exemple dans un parking sous-terrain, à l'intérieur duquel une communication GSM/UMTS ne serait pas possible. Un tel mécanisme de "handover", c'est-à-dire de basculement automatique et transparent pour un utilisateur, d'une communication initiée sur un premier point d'accès femto, sur un ou plusieurs autres (successivement) points d'accès femto, dès lors que la qualité de la communication via le premier point d'accès femto deviendrait insuffisante.
Pour permettre un tel mécanisme de "handover", il s'avère cependant nécessaire que les cellules femto impliquées dans une communication en cours aient une connaissance préalable des autres cellules ou points d'accès femto environnants vers lesquels basculer sans interruption la communication en cours.
Ceci s'avère d'autant plus nécessaire lorsqu'il s'agit de disposer d'une couverture étendue - dans une entreprise par exemple - par une mise en oeuvre d'une pluralité de cellules femto destinées à collaborer pour fournir une telle couverture requise.

Dans ce contexte, l'invention consiste à apporter une solution permettant de palier l'ensemble des inconvénients précités, en donnant la possibilité à des cellules femto destinées à former un réseau de cellules femto, par exemple pour former un réseau LAN (pour "Local Area Network" en anglais) au sein d'une entreprise, ou bien encore un réseau local permettant d'assurer des communications mobiles dans des zones non ou faiblement couvertes par un réseau mobile d'opérateur telles qu'un parking sous-terrain.

Il s'agit également au moyen de l'invention de fournir une technique simple et efficace permettant à un ensemble de points d'accès ou cellules (les deux termes étant considérés comme étant similaires ou identiques dans la suite) composant un tel réseau local cellulaire, de s'auto-configurer en ayant une pleine connaissance des autres cellules femto situées dans leur proche voisinage et sur lesquelles elles pourront s'appuyer, notamment pour réaliser une procédure de "handover" telle que définie précédemment.

A ce titre, l'invention propose un procédé de configuration d'un réseau local cellulaire comprenant une pluralité de points d'accès, un système et un produit programme d'ordinateur selon les revendications 1, 13 et 14.

Les réalisations et/ou exemples dans la description ci-dessous qui ne sont pas couverts par les revendications en annexe, ne sont pas considérés comme faisant partie de la présente invention.

Selon l'invention, un tel procédé comprend avantageusement, à chaque activation d'un nouveau point d'accès appartenant à ladite pluralité de point d'accès :
- une étape d'identification d'au moins un point d'accès voisin du nouveau point d'accès activé, à partir d'un message d'identification diffusé par ledit point d'accès voisin à un ensemble de points d'accès actifs de la pluralité de points d'accès, lorsque ledit message d'identification a été reçu sur une interface LAN du nouveau point d'accès activé
- une étape de diffusion par le nouveau point d'accès activé, d'un message d'identification représentatif de sa propre identité, à destination de l'ensemble de points d'accès actifs.

Le procédé selon l'invention permet ainsi à tout point d'accès activé, par exemple du type point d'accès femto ou pico, d'avoir une parfaite connaissance de ses points d'accès voisins (autres cellules femto ou pico), au moyen d'une simple détection de messages d'identification diffusés en interne au LAN par l'ensemble des différents points d'accès actifs du réseau local cellulaire.

De plus, une fois actif, le nouveau point d'accès va lui-même diffuser sur le réseau LAN un message d'identification, lequel sera alors détecté par les autres points d'accès actifs qui pourront alors enrichir leur connaissance de leurs points d'accès actifs voisins.

Si ces messages sont reçus sur l'interface LAN d'un point d'accès nouvellement activé, c'est en effet que ce message a nécessairement été envoyé par un point d'accès appartenant au même réseau local, de sorte que ce dernier peut alors être identifié comme étant un voisin du point d'accès nouvellement activé.

Pour détecter un tel message, le nouveau point d'accès est en écoute sur son interface LAN et seuls des messages transmis à l'intérieur du réseau LAN par un point d'accès actif pourront alors être détectés par les autres points d'accès actifs du réseau local cellulaire sur leur interface d'accès à ce dernier.

Une fois détecté l'ensemble de ses points d'accès voisins à l'intérieur du réseau local cellulaire, tout point d'accès nouvellement activé dans le réseau LAN va alors diffuser un message d'identification représentatif de sa propre identité, à destination de l'ensemble de points d'accès actifs, de façon que ces derniers puissent l'identifier en tant que nouveau point d'accès voisin.

Ainsi, tous les points d'accès actifs du réseau local cellulaire auront une parfaite connaissance, actualisée, de l'ensemble de leurs points d'accès voisins, ce qui constitue une condition essentielle pour la mise en oeuvre d'une procédure de "handover", notamment lorsque le réseau cellulaire est du type femto ou pico.
Ceci s'avère d'autant plus important si l'on souhaite préserver la facilité de déploiement des cellules femto (devant être le plus souvent installées par le client final et donc auto-configurables), tout point d'accès femto appartenant à un réseau local cellulaire, devant alors être capable de découvrir ses voisins au sein du réseau local cellulaire. L'invention met en oeuvre au moyen du procédé proposé une telle fonction d'auto-découverte basée sur l'analyse, au niveau d'un point d'accès de réseau local cellulaire, d'informations reçues d'une part de l'interface radio 2G et 3G, d'autre part, de l'interface au LAN.

L'interface radio mobile permet quant à elle, d'une part de délivrer le service cellule femto et, d'autre part, de recevoir des informations provenant des cellules environnantes femto ou macro.

On précise en outre qu'au niveau de son interface radio, un point d'accès femto sait distinguer les stations de base du réseau macro (BTS en 2G ou NodeB en 3G) des cellules femto, car ces deux types d'émetteurs utilisent des canaux radios différents voire des porteuses radios différentes.

Cette condition constitue une hypothèse la plus réaliste pour permettre un déploiement d'un système de cellules femto sans dégradation des performances du réseau macro. Par ailleurs, un point d'accès femto peut identifier les cellules femto environnantes par leur paramètre "Cell Identity" diffusé dans les messages de signalisation ("messages System Information" - pour "Système d'information à base de messages" ou "Packet System Information" pour "Système d'information à base de packets"). Ces informations correspondent aux paramètres et aux messages spécifiés par le 3GPP.

Au niveau du réseau local, la découverte du réseau local cellulaire suppose un échange d'informations sous forme d'annonces, équivalent à une voie balise sur une technologie radio. Un message serait diffusé périodiquement par chaque point d'accès du réseau local cellulaire vers le groupe de Points d'Accès du réseau local cellulaire via l'infrastructure du LAN. Il contiendrait, au minimum, le paramètre "Cell Identity" du point d'accès émetteur. Cette information n'aurait pas besoin d'être chiffrée dans la mesure où elle également diffusée par la voie radio et peut être reçue par tous les terminaux mobiles. Il contiendra également le paramètre " PLMN identity" qui identifie le réseau mobile d'opérateur dont dépend la cellule femto (cette information permet d'identifier la cellule dans l'absolu et notamment de dissocier des réseaux locaux cellulaires de différents opérateurs mobiles hébergés dans un même LAN).

Préférentiellement, le message d'identification étant reçu simultanément sur l'interface LAN et sur une interface radio du nouveau point d'accès activé, le procédé comprend une étape complémentaire de comparaison du canal radio d'émission propre au message d'identification reçu sur l'interface radio, avec un ensemble de canaux radio prédéterminés propre au déploiement des cellules femto de l'opérateur mobile.

Ainsi, pour un point d'accès du réseau local cellulaire, la découverte ou détection automatique de ses points d'accès voisins dans le réseau local cellulaire s'opère sur la base d'une combinaison et comparaison des messages d'identification reçus respectivement et simultanément sur son interface LAN et sur son interface radio.

Dans ces conditions, un Point d'Accès du réseau local cellulaire peut distinguer entre un point d'accès femto appartenant au même réseau local cellulaire et un autre point d'accès femto qui serait extérieur au réseau local cellulaire, comme précisé dans le tableau de l'annexe A.

Dans un mode de réalisation avantageux de l'invention, la diffusion des messages entre les points d'accès actifs de la pluralité de points d'accès tient compte d'une adresse de groupe du type multipoints, définie dans une plage prédéterminée d'adresses accessibles à l'intérieur du réseau cellulaire.

Tous les messages d'identification propres de chaque point d'accès actif du réseau local cellulaire, respectivement, sont alors diffusés à l'ensemble des points autres d'accès actifs du réseau local cellulaire, en une seule fois, ces derniers n'ayant qu'à écouter les messages sur leur interface LAN ou radio respective pour avoir ou prendre connaissance d'un point d'accès voisin.

Dans un mode de réalisation avantageux de l'invention, notamment lorsque le LAN est du type IPv4, l'adresse de groupe multipoints est une adresse IP comprise entre l'adresse 224.0.0.0 incluse et l'adresse 224.0.0.255 incluse.
Ainsi, pour restreindre la diffusion des messages d'identification à l'intérieur du LAN, par exemple un réseau local cellulaire mis en oeuvre au sein d'une entreprise, on utilise une adresse multicast comprise entre 224.0.0.0 et 224.0.0.255. Idéalement le 3GPP pourrait négocier auprès de l'IANA une valeur dédiée pour les applications de réseau local cellulaire, de façon à rendre possible l'interopérabilité entre différents constructeurs. Dans l'intervalle, les Points d'Accès de réseau local cellulaire devraient utiliser une adresse de multicast définie (et modifiable) dans leur configuration locale. Il est bien entendu que l'adresse de groupe multipoints pourra revêtir un autre format lorsque le LAN sera d'un autre type, par exemple IPv6, sans que cela n'ait d'influence sur la portée de ce mode de réalisation avantageux de l'invention.

Préférentiellement, le message d'identification se présente sous la forme d'au moins un paquet de données structuré du type datagramme IP multicast.

Un tel choix de mise en oeuvre s'avère particulièrement intéressant en ce qu'il permet la transmission de tels messages d'identification au travers une grande variété de technologies LAN supportant le protocole IP multicast.
La diffusion multipoint est en effet typiquement assurée par un routage multicast. Aussi pour diffuser une annonce contenant son identité, chaque point d'accès d'un réseau local cellulaire émet un datagramme IP avec une adresse multicast comme adresse IP de destination. De même, pour recevoir les annonces de ces éventuels voisins, tout point d'accès de réseau local cellulaire doit "écouter" sur la même adresse multicast puisque celle-ci est partagée par l'ensemble des points d'accès actifs appartenant à un même réseau local cellulaire.

Dans un mode de réalisation avantageux de l'invention, ledit au moins un datagramme IP multicast comportant un champ d'information représentatif d'une durée de vie, la valeur de ce champ d'information est fixée à « 1 ».

Cela permet de garantir un niveau de sécurité supplémentaire en cantonnant la diffusion des messages d'identification à l'intérieur du réseau local, simplement en exploitant le champ de durée de vie ou "Time-To-Live" - TTL du datagramme IP.

Une valeur de TTL fixé à "1" au niveau de chaque datagramme IP permet ainsi d'éviter toute "fuite" de message d'identification vers l'extérieur du LAN constitué d'une pluralité de cellules femto (ou points d'accès femto)actives.

Dans un autre mode de réalisation particulièrement intéressant de l'invention, ledit au moins un datagramme IP multicast comporte un champ d'information représentatif d'une durée de vie de valeur fixée à « 255 » et le procédé met en oeuvre une étape supplémentaire de filtrage sur cette valeur de champ de durée de vie.

Une telle approche permet encore d'augmenter le niveau de sécurité dans la diffusion des messages d'identification à destination des cellules femto d'un même réseau local cellulaire.

En effet, en fixant la valeur du TTL de chaque datagramme IP à "255" et en ajoutant un filtre au niveau des points d'Accès de réseau local cellulaire, lequel filtre pourrait consister à ignorer volontairement tout message d'intrusion pouvant s'apparenter à un message d'identification, mais qui comporterait un TTL inférieur à 255, on permet d'éviter toute intrusions de l'extérieur. De facto, quand on utilise l'adresse multicast, on se limite au LAN, mais on obtient une sécurité supplémentaire avec TTL à 255.

Dans un mode de réalisation préféré de l'invention, le procédé de configuration comprend pour chaque point d'accès actif du réseau local cellulaire, une étape de mise à jour d'une liste de tous ses points d'accès actifs voisins, identifiés à l'étape d'identification et appartenant au même réseau local cellulaire.

Une telle approche est remarquable en ce qu'elle permet pour chaque point d'accès actif d'un réseau local cellulaire, de maintenir à jour la liste de ses voisins actifs vers lesquels une communication en cours pourra être basculée, par exemple en cas de nécessité d'une procédure de "handover".

Dès qu'un point d'accès du réseau local cellulaire découvre qu'il possède un nouveau voisin au sein du réseau local cellulaire (cas n°3, voire 4 dans le tableau de l'annexe A), celui-ci doit mettre à jour la signalisation qu'il diffuse sur l'interface radio, en particulier les messages de type "Messages System Information" ou "Packet System Information" et autre élément d'information du type "Intra-frequency cell info list".

Inversement lorsqu'un Point d'Accès voisin au sein du réseau local cellulaire disparaît (redéploiement du Point d'Accès femto, défaillance ou maintenance au niveau du réseau local, coupure d'alimentation, défaillance matérielle, etc.), les messages seront également mis à jour. La disparition d'un point d'Accès du réseau local cellulaire est détectée sur une perte répétée du message d'identification (normalement périodique) diffusé via le réseau local.

Avec cette information supplémentaire (liste des cellules femto voisines), les terminaux (MS ou UE) peuvent réaliser des mesures sur les cellules voisines et les reporter au "système femto" (Point d'Accès ou concentrateur femto). Cette avancée constitue une première étape pour proposer un "handover" inter-cellules femto et intra-réseau cellulaire femto.

De plus, une telle approche selon l'invention permet aussi pour à tous les points d'accès actifs du réseau local cellulaire situés en dehors de la couverture macro, de construire une liste des cellules macro voisines. On peut en effet avoir un terminal mobile situé à l'intersection des cellules macro voisines. Pour cela et de façon complémentaire, le message diffusé contiendra en plus de l'identification du point d'accès la liste des cellules macro et femto détectées par l'interface radio.

Dans un mode de réalisation possible de l'invention, la liste de points d'accès actifs voisins propre d'un point d'accès actif donné du réseau local cellulaire est stockée dans une zone mémoire du point d'accès donné.

Dans un autre mode de réalisation possible de l'invention, la liste de points d'accès actifs voisins propre de chaque point d'accès actif donné du réseau local cellulaire, respectivement, est stockée dans une zone mémoire d'au moins une entité de gestion des points d'accès appartenant au réseau local cellulaire.

Préférentiellement, le message d'identification est diffusé par le point d'accès voisin, à intervalles de temps réguliers à l'ensemble de points d'accès actifs.

Une diffusion périodique des annonces est nécessaire pour deux raisons :
- d'une part pour permettre à des points d'accès qui seraient en phase d'initialisation de découvrir l'ensemble des autres points d'accès constitutif du réseau local cellulaire par construction de la liste de ses cellules femto voisines, et;
- d'autre part, pour détecter la désactivation dans le réseau local cellulaire de points d'accès femto, une telle désactivation nécessitant une mise à jour de la liste des cellules femto voisines (suppression d'un élément). On considère la disparition effective après une suite (trois fois par exemple) de non-réceptions d'un message d'identification.
La période de diffusion doit être homogène pour l'ensemble du parc de Points d'Accès femto d'un même client. Sa valeur est le résultat d'un compromis entre :
- D'une part :
   ∘ la charge CPU au niveau du Point d'Accès engendrée par cette tâche de fond (émission et réception des annonces);
   ∘ dans une moindre mesure, la charge de trafic induite sur le réseau local;
- Et d'autre part :
   ∘ le délai maximal d'apprentissage du réseau local cellulaire (1 période nécessaire);
   ∘ le délai maximal de détection de "perte" d'un Point d'Accès (multiple de la période).
Une valeur typique pour la période de diffusion pourrait être 10 à 30 secondes.

Préférentiellement, tout point d'accès actif du réseau local cellulaire diffusant en continu et à intervalles de temps réguliers un message d'identification sur l'adresse de groupe multipoints, si un message d'identification propre d'un premier point d'accès appartenant à une liste de voisins d'un deuxième point, n'a pas été détecté pendant un nombre de fois prédéterminé, par le deuxième point d'accès sur l'une au moins de ses interfaces LAN ou radio, alors le premier point d'accès est retiré de la liste des voisins actifs du deuxième point d'accès.

En effet, à titre d'exemple illustratif, un point d'accès noté C, une fois activé dans le réseau local cellulaire, sait qu'il doit recevoir à intervalle de temps régulier un message d'identification en provenance de chacun de ses points d'accès voisins, par exemple un point d'accès noté A et un autre noté B.

Si un point d'Accès A du réseau local cellulaire voisin disparaît, par exemple dans une situation de redéploiement du point d'accès femto A, de défaillance, de maintenance au niveau du réseau local, de coupure d'alimentation, ou bien encore de défaillance matérielle, etc., les messages d'identification habituellement diffusés par A ne le seront plus. Cette absence de diffusion sera alors interprétée par les points d'accès B et C comme nécessitant une mise à jour de leur liste de points d'accès actifs voisins.

Dans une variante possible de mise en oeuvre de l'invention, le message d'identification comporte au moins un champ d'information représentatif d'une localisation d'au moins une station de base de type 2G ou 3G propre à un réseau macro situé au voisinage du réseau local cellulaire.

S'il s'agit d'une premier point d'accès activé dans un parking sous-terrain, par exemple, ou dans tout autre lieu à couverture faible ou limitée, ce point d'accès ne sera pas en mesure d'écouter le réseau macro pour obtenir une information représentative de sa localisation, auquel cas il la recevra ultérieurement de ses points d'accès voisins et le champ "localisation" sera vierge dans les messages d'identification qu'il va diffuser. Cette information de localisation peut être obtenue uniquement au niveau du réseau macro de l'opérateur mobile. S'il dispose au contraire de cette information de localisation, le point d'accès diffusera cette information à l'intérieur de chacun de ses messages d'identification.

Cette information de localisation pourra être récupérée lors de la diffusion radio d'une station de base 2G ou 3G du réseau macro (à condition d'être sous couverture. Seule la localisation du réseau macro est alors pertinente. L'information de localisation diffusée par les cellules n'est pas pertinente. L'information de localisation étant en outre différente pour le réseau macro 2G et le réseau macro 3G, dans ce cas, il faut diffuser les deux informations de localisation propres aux stations de base 2G et 3G, respectivement. Le principe consistera donc à annoncer les informations de localisation des stations détectées sur l'interface radio des cellules ou points d'accès femto du réseau local cellulaire.

Les points d'accès du réseau local cellulaire diffusent au sein du groupe un minimum d'information permettant d'être identifiés à la fois sur l'interface radio et sur l'interface LAN. On peut imaginer qu'ils envoient également des informations supplémentaires qui puissent aider d'autres Points d'Accès du réseau local cellulaire à s'auto-configurer, par exemple l'information de localisation extraite du réseau macro, et pour des cellules femto 3G, le code d'embrouillage utilisé. La localisation est en effet une information essentielle pour le traitement des appels d'urgence voire l'identification du concentrateur femto de rattachement.

Partager de telles informations serait très utile pour les points d'accès du réseau local cellulaire qui ne sont pas sous couverture du réseau macro tandis qu'au moins un autre point d'accès l'est.

Par exemple, on pourrait avoir un point d'accès en sous-sol (salle de réunion, local technique, parking) hors couverture du réseau macro alors qu'un autre est en bord de fenêtre sous couverture du réseau macro.

Cette approche permet une extension de la couverture du réseau pourvu que les points d'accès soient raccordés au réseau local de l'entreprise.

Préférentiellement, les points d'accès de la pluralité de point d'accès sont du type cellule/point d'accès femto ou pico.

L'invention concerne aussi un système de configuration d'un réseau local cellulaire comprenant une pluralité de points d'accès ayant chacun une interface LAN d'accès au réseau local cellulaire et une interface radio mobile adaptée pour accéder à un réseau mobile d'opérateur, les points d'accès étant adaptés pour communiquer entre eux.

Selon l'invention, un tel système comprend avantageusement :
- des moyens d'activation d'un nouveau point d'accès appartenant à la pluralité de point d'accès;
- des moyens d'identification d'au moins un point d'accès voisin du nouveau point d'accès activé, ces moyens tenant compte d'un message d'identification diffusé par le point d'accès voisin à un ensemble de points d'accès actifs de la pluralité de points d'accès, et ces moyens étant activés dès lors que le message d'identification a été reçu sur l'interface LAN du nouveau point d'accès activé;
- une étape de diffusion par le nouveau point d'accès activé, d'un message d'identification représentatif de sa propre identité, à destination de l'ensemble de points d'accès actifs.

L'invention concerne encore un produit programme d'ordinateur téléchargeable depuis un réseau de communication et/ou stocké sur un support lisible par ordinateur et/ou exécutable par un microprocesseur, un tel programme étant remarquable en ce qu'il comprend des instructions de code de programme pour l'exécution d'un procédé de configuration d'un réseau local cellulaire comprenant une pluralité de points d'accès comportant chacun une interface LAN et une interface radio d'accès à un réseau mobile d'un opérateur, conforme au procédé de configuration précité, lorsque le programme est exécuté sur un ordinateur.

Il est bien entendu possible d'envisager sans limitation aucune, toutes autres combinaisons des caractéristiques précitées propres au procédé de configuration décrit ci-dessus.

Les caractéristiques et avantages techniques de la présente invention ressortiront mieux de la description suivante, faite à titre indicatif et non limitatif, au regard des dessins annexés sur lesquels :
- la figure 1 présente un exemple d'architecture de réseau local cellulaire privé au sens de l'invention ;
- la figure 2 est une illustration, au travers d'un cas d'usage simple, d'une mise en oeuvre du procédé de configuration selon l'invention ;
- la figure 3 résume les grandes étapes du procédé de configuration selon l'invention.

Les points d'accès ou cellules femto sont des mini-stations de base Femto qui permettent aux opérateurs mobiles de fournir aux particuliers et aux entreprises une couverture 3G (UMTS/HSPA) au bureau ou à domicile, ou dans tout autre environnement bénéficiant d'une couverture pour le moins limitée, tel qu'un parking sous-terrain, par exemple.

Les cellules Femto sont des points d'accès qui améliorent la couverture sans fil à l'intérieur de bâtiments et qui sont raccordés à des "box" (ou passerelles résidentielles) reliés au réseau filaire. Lorsqu'un utilisateur est à proximité d'un point d'accès, ses communications téléphoniques 3G transitent par le boîtier avant de rejoindre le réseau DSL, n'importe quel téléphone compatible 3G faisant l'affaire.

L'invention propose ainsi un mécanisme d'auto-configuration de cellules femto appartenant à un ensemble homogène de cellules femto, par exemple un parc de cellules femto d'un même client Entreprise. Ces mécanismes comprennent l'auto-découverte des autres cellules femto et l'échange d'informations pour ajuster leur configuration : mise à jour de la liste des cellules voisines, localisation, réglages de paramètres radio, etc.

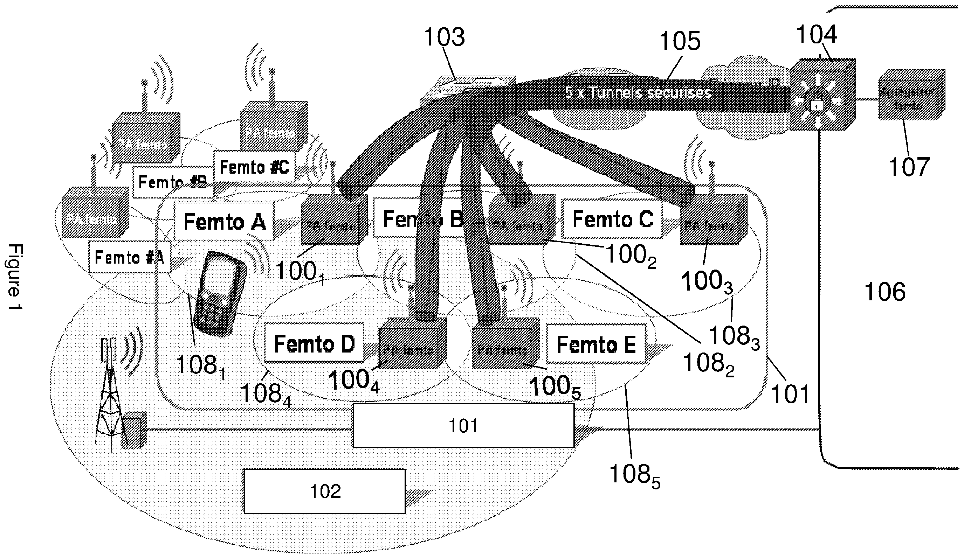

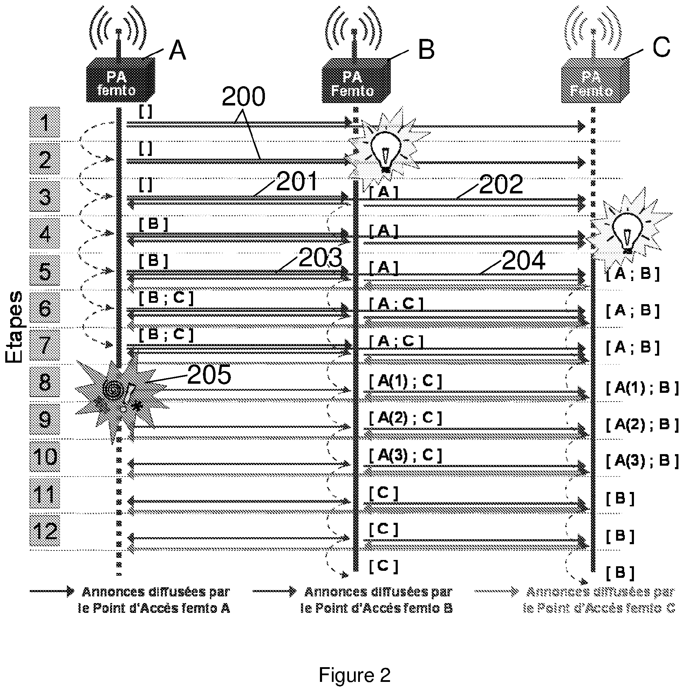

On décrit ci-après de façon détaillée, un mode de réalisation possible de l'invention, en relation avec les figures 1 et 2.

Un point 100₁, 100₂, 100₃, 100₄, 100₅ d'accès femto comprend un récepteur radio 2G et 3G, de façon à pouvoir écouter et/ou scanner des fréquences 2G et 3G dans l'objectif d'identifier ses points d'accès voisins à l'intérieur d'un réseau local cellulaire 101. Un tel récepteur, qui pourra être similaire à ceux équipant les téléphones mobiles standards du marché, permettra selon l'invention à une cellule femto unique de s'auto-configurer en écoutant les messages diffusés sur le réseau macro 102.

La découverte automatique de leurs voisins respectifs, par les points 100₁, 100₂, 100₃, 100₄, 100₅ d'accès actifs d'un réseau local cellulaire 101, s'effectue par le LAN. Une telle découverte est opérée en croisant les messages d'identification reçus simultanément par chaque point d'accès femto, d'une part sur son interface LAN et d'autre part sur son interface radio lui permettant d'accéder, par exemple via un commutateur Ethernet 103 à un réseau mobile 106 d'un opérateur, éventuellement suite à la mise en oeuvre d'un tunnel de communication sécurisé 105, jusqu'à une passerelle sécurisée 104 d'accès au réseau 106, ce dernier comportant un agrégateur 107 de cellules ou points d'accès femto relié à la passerelle sécurisée 104.

Sur la figure 1, chaque cellule ou point 100₁, 100₂, 100₃, 100₄, 100₅ d'accès femto possède sa propre zone de couverture 108₁, 108₂, 108₃, 108₄, 108₅ respectivement, à l'intérieur du réseau LAN 101, l'ensemble des zones de couverture définissant la zone de couverture globale du réseau femto LAN 101.

Dans ces conditions, un point d'accès du réseau local cellulaire peut distinguer entre un point d'accès femto appartenant au même réseau cellulaire et un autre point d'accès femto qui serait extérieur audit réseau local cellulaire.

En effet, selon la technologie radio (GSM ou UMTS) et la stratégie de déploiement d'une architecture de réseau local cellulaire à base de points d'accès femto, différentes approches permettent de distinguer entre les cellules femto appartenant à un réseau local cellulaire, et celles appartenant à un réseau macro 102 :
- dans le cas d'un réseau cellulaire 2G ou 3G, lorsque les cellules femto sont associées à une (des) porteuse(s) dédiée(s), les stations de base peuvent être aisément distinguées les unes par rapport aux autres par simple comparaison des fréquences d'émission de leurs porteuses respectives. Dans ce cas, la fréquence d'émission définie pour la (ou les) porteuse(s) partagée(s) des cellules femto d'un même réseau local cellulaire devra faire partie des paramètres de configuration de chacune des cellules femto composant ce réseau local cellulaire.
- dans le cas d'un réseau cellulaire 3G, lorsque les cellules femto partagent une même porteuse que celle des cellules du réseau macro 102, les cellules 100₁, 100₂, 100₃ femto peuvent être distinguées les unes par rapport aux autres, au moyen du code d'embrouillage (ou "scrambling code" selon une terminologie anglophone). Dans ce cas, l'ensemble des codes d'embrouillage définis pour les cellules femto devra faire partie des paramètres de configuration des cellules femto.

En relation avec la figure 2 et le tableau de l'annexe A, dès lors qu'un point d'accès du réseau 101 local cellulaire découvre la présence d'un point 100₁, 100₂, 100₃, 100₄, 100₅ d'accès voisin appartenant au même réseau 101 local cellulaire (cas 3 et 4 du tableau de l'annexe A), il va mettre à jour sa liste de points d'accès voisins pour enrichir sa propre signalisation, laquelle servira de support à son système de diffusion multipoints de messages d'identification via son interface radio mobile.

A l'inverse, lorsqu'un point d'accès du réseau local cellulaire disparaît de ce dernier (cas d'une défaillance ou d'une mise à jour du réseau LAN, défaillance d'alimentation, défaillance matérielle, etc.), les différents points d'accès restés actifs mettront alors à jour leur liste de points d'accès voisins par suppression du point d'accès ayant disparu. Une disparition d'un point d'accès actif dans le réseau LAN est détectée par les différents points d'accès voisins de ce dernier, dès lors qu'ils ne reçoivent plus à intervalles de temps réguliers le message d'identification du point d'accès disparu.

La figure 2 illustre au travers d'un exemple, le mécanisme de découverte des points d'accès voisins dans un réseau local cellulaire privé.

Dans cet exemple, on considère trois points d'accès femto A, B et C, respectivement connecté à un réseau LAN.

Aux étapes 1 et 2, seul le point d'accès A est actif dans le réseau LAN. Celui-ci indique sa présence dans le réseau LAN en diffusant 200 à intervalle de temps régulier un message d'identification contenant au moins une information représentative de son identité.

A l'étape 3, un nouveau point d'accès B est activé dans le réseau LAN. En écoutant le réseau LAN, il détecte alors la présence du point d'accès voisin A et l'intègre dans sa liste des points d'accès voisins actifs. Il commence ensuite à diffuser 201, 202 dans le réseau LAN et également à intervalles de temps réguliers un message d'identification contenant au moins une information représentative de son identité.

A l'étape 4, le point d'accès A en écoute sur le réseau LAN détecte à son tour la présence du point d'accès actif voisin B sur le réseau LAN, de sorte qu'il va mettre à jour sa propre liste de points d'accès voisins en y ajoutant le point d'accès voisin B.

A l'étape 5, un troisième point d'accès C est activé dans le réseau LAN. En écoutant le réseau LAN, il détecte alors la présence de ses points d'accès voisins A et B. Il les intègre dans sa propre liste des points d'accès voisins actifs.
Il commence ensuite à diffuser 203, 204 dans le réseau LAN et également à intervalle de temps régulier un message d'identification contenant au moins une information représentative de son identité.
Aux étapes 6 et 7, les trois points d'accès actifs A, B et C se détectent mutuellement par échanges de messages respectifs d'identification.

Aux étapes 8 à 10, pour une raison 205 spécifique (défaillance matérielle, défaillance d'alimentation électrique, perte de la connexion IP, etc.) le point d'accès A devient inactif, de sorte qu'il arrête de diffuser, à intervalles de temps réguliers sur une adresse multipoints du réseau LAN, son message d'identification.

Aux étapes 11 et 12, les deux autres points d'accès B et C voisins restés actifs détectent alors que le point d'accès A ne diffuse plus son message d'identification, de sorte qu'ils vont mettre à jour leur liste de points d'accès voisins en supprimant le point d'accès A de celle-ci, respectivement.

Pour ce qui concerne l'implémentation d'un réseau 101 local cellulaire au sens de l'invention, une contrainte importante que les inventeurs se sont fixés était qu'aucun équipement supplémentaire à ceux habituellement rencontrés dans les réseaux cellulaires femto ne devait être ajouté. De même, l'ensemble des caractéristiques additionnelles des points d'accès femto constitutifs d'un tel réseau local cellulaire devait pouvoir être supporté par des points d'accès femto standards du marché.

Pour ce qui concerne le protocole de découverte mutuelle et dynamique par les points d'accès femto de leurs points d'accès voisins actifs à l'intérieur du réseau 101 privé femto, sa particularité au sens de l'invention, repose sur la fourniture d'un canal similaire aux canaux 2G ou 3G BCCH au sein du réseau local cellulaire, de façon à permettre un échange de messages d'information notamment du type message d'identification, entre les différents points d'accès femto connecté au réseau LAN. Les différents messages échangés entre les différents points d'accès femto d'un même réseau LAN sont diffusés en mode multicast et sous la forme de datagrammes IP, de façon que le protocole de découverte selon l'invention puisse être utilisé au travers d'un grand nombre de réseaux LAN supportant les échanges de datagrammes IP.

Le protocole de découverte des points d'accès voisins selon l'invention s'appuie sur le protocole UDP/ IP.

Est décrit ci-dessous les différentes spécificités du protocole de codage des messages d'identification propres à l'invention.

En relation avec le protocole UDP/ IP, chaque datagramme IP constitutif d'un message d'identification diffusé en multicast par un point d'accès femto vers l'ensemble des autres points d'accès femto d'un même réseau local cellulaire de type LAN comprend:
- un champ "source IP address" contenant une adresse IP dynamique ou statique du point d'accès émetteur d'un message d'identification sur le réseau LAN;
- un champ "destination IP address" contenant l'adresse multipoints permettant la diffusion multicast du message d'identification. Elle sera de la forme IPv4 224.0.0.X, avec 1<X<255, et permettra la diffusion des messages d'identification uniquement de façon restreinte en interne au réseau LAN;
- un champ "Time to live - TTL" contenant une valeur spécifique permettant de restreindre la diffusion uniquement en interne au réseau local LAN et d'éviter toute fuite vers l'extérieur :
   ∘ TTL = "1" pour éviter toute fuite de message en dehors du LAN;
   ∘ TTL = "255" pour filtrer en réception les messages d'identification diffusés sur le LAN et qui possèderaient une valeur de TTL inférieure à 255.

Chaque message d'identification possède un entête de message, ainsi qu'une liste d'informations dont chaque élément est codé suivant le codage "Type-Length-Value" : un bit d'information identifie le "type" d'information, au moins un bit d'information précise la longueur de l'information, suivis de la valeur de l'élément d'information.

Chaque message d'identification contient relativement à son point d'accès femto émetteur au moins deux informations importantes, à savoir :
- une et une seule information représentative du point d'accès femto source à l'origine de sa diffusion;
- une information représentative du réseau d'opérateur mobile dont dépend ledit point d'accès émetteur;
- au moins une information représentative des stations de base voisines (stations de base du réseau macro et point d'accès femto appartenant au réseau local cellulaire ou non) détectées par l'interface radio dudit point d'accès émetteur.

D'autres sources d'information possibles sont décrites de façon plus détaillée dans le tableau de l'annexe B.

Le tableau de l'annexe C décrit les éléments d'information qui sont traités en relation avec le protocole de découverte des points d'accès voisins selon l'invention.

Comme indiqué précédemment, tous les messages d'identification diffusés en mode multicast par les différents points d'accès actifs d'un même réseau local cellulaire le sont à intervalles de temps réguliers. Cette période de diffusion multicast des messages d'identification est essentielle pour:
- permettre aux différents points d'accès déjà actifs du réseau local cellulaire de découvrir rapidement et simplement tous les autres points d'accès voisins appartenant au réseau local cellulaire et nouvellement connecté ou activé à l'intérieur de ce dernier;
- permettre à chaque point d'accès femto actif du réseau local cellulaire de mettre à jour, de façon dynamique la liste de ses points d'accès voisins, à chaque modification touchant l'un de ces derniers, par exemple une défaillance matérielle intempestive, etc.;
- détecter facilement toute nouvelle activation ou connexion d'un point d'accès femto à l'intérieur du réseau local cellulaire (insertion ou suppression).

Ainsi et de façon avantageuse, tous les messages d'identification diffusés respectivement par chaque point d'accès actif appartenant au réseau local cellulaire, seront diffusés avec la même période T_{broad} partagée par tous les points d'accès d'un même réseau local cellulaire.

De même, chaque point d'accès femto d'un même réseau local cellulaire partagera une même valeur de variable formant compteur de non réception d'un message d'identification qu'un point d'accès actif donné du réseau aurait dû transmettre avec la période T_{broad}. Cette variable de compteur est incrémentée à chaque fois qu'un message d'identification propre au point d'accès donné n'a pas été reçu par les autres points d'accès actifs du réseau local cellulaire, suivant les règles suivantes:
- valeur initiale du compteur fixée à zéro;
- à chaque fois qu'un message d'identification qui aurait dû être diffusé par un point d'accès donné du réseau n'a pas été reçu par les autres points d'accès actifs du même réseau, dans le délai T_{broad} modulo une marge de tolérance paramétrable, laquelle peut être fixée par exemple, à 50% de T_{broad}, la valeur du compteur est incrémenté de un;
- si le message est reçu dans l'intervalle suivant, le compteur est remis à zéro;
- si au contraire la valeur du compteur atteint un seuil maximum qui peut être fixé à "3", le point d'accès donné, devenu inactif dans le réseau, est supprimé de la liste des points d'accès voisins de chacun des points d'accès restés actifs à l'intérieur du réseau local cellulaire.

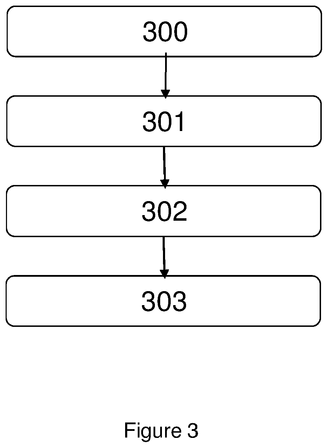

On résume ci-dessous en relation avec la figure 3 les grandes étapes du procédé de configuration d'un réseau local cellulaire comprenant une pluralité de points d'accès comportant chacun une interface LAN d'accès au réseau local cellulaire et une interface radio mobile adaptée pour accéder à un réseau mobile d'opérateur ; à chaque activation d'un nouveau point d'accès appartenant à ladite pluralité de point d'accès :
- une étape 300 d'identification d'au moins un point d'accès voisin du nouveau point d'accès activé, à partir d'un message d'identification diffusé par le point d'accès voisin, à un ensemble de points d'accès actifs de la pluralité de points d'accès, lorsque ce message d'identification a été reçu sur l'interface LAN du nouveau point d'accès activé ;
- une étape 301 complémentaire de comparaison du canal radio d'émission propre au message d'identification reçu sur l'interface radio, avec un ensemble de canaux radio prédéterminés au déploiement des cellules femto de l'opérateur mobile;
- pour chaque point d'accès actif du réseau local cellulaire, une étape 302 de mise à jour d'une liste de tous ses points d'accès actifs voisins, identifiés à ladite étape d'identification et appartenant au même réseau local cellulaire.
- une étape 303 de diffusion par le nouveau point d'accès activé, d'un message d'identification représentatif de sa propre identité, à destination de l'ensemble de points d'accès actifs.

Ainsi, l'implémentation du protocole de découverte de points d'accès voisins, selon l'invention, au niveau de chaque point d'accès d'un réseau local cellulaire, permet à chaque point d'accès de ce réseau de s'auto-configurer de façon dynamique en détectant l'ensemble de ses différents points d'accès voisins appartenant au même réseau.

Une telle possibilité d'auto-configuration s'avère particulièrement pertinente dans un contexte de réseau local cellulaire puisqu'elle permet de mettre en oeuvre un mécanisme prêt à l'emploi pour servir de support à une mobilité inter points d'accès dans le réseau, sans nécessité d'une configuration manuelle complémentaire.

Vu côté fournisseur de services femto, une telle approche selon l'invention est en outre particulièrement pertinente et efficace puisqu'elle permet d'une part de s'affranchir des contraintes des systèmes de l'art antérieur en matière de configuration manuelle des points d'accès femto et, d'autre part, de permettre une réduction des coûts d'administration du réseau local cellulaire. De plus, du point de vu du client final, le processus de déploiement d'un point d'accès femto se trouve donc limité à l'achat d'un point d'accès femto. De plus, l'utilisateur final, une fois le point d'accès femto installé chez lui, n'aura rien à faire, une telle approche étant remarquable sur le plan de sa flexibilité et de sa scalabilité : l'administrateur du réseau local cellulaire constitué d'un ensemble de points d'accès femto pourra administrer son réseau local cellulaire de manière très simple en connectant chaque point d'accès femto à un réseau LAN (virtuel). Il pourra également selon les besoins, ajouter au réseau d'autres point d'accès femto, en retirer, etc.

### ANNEXE A

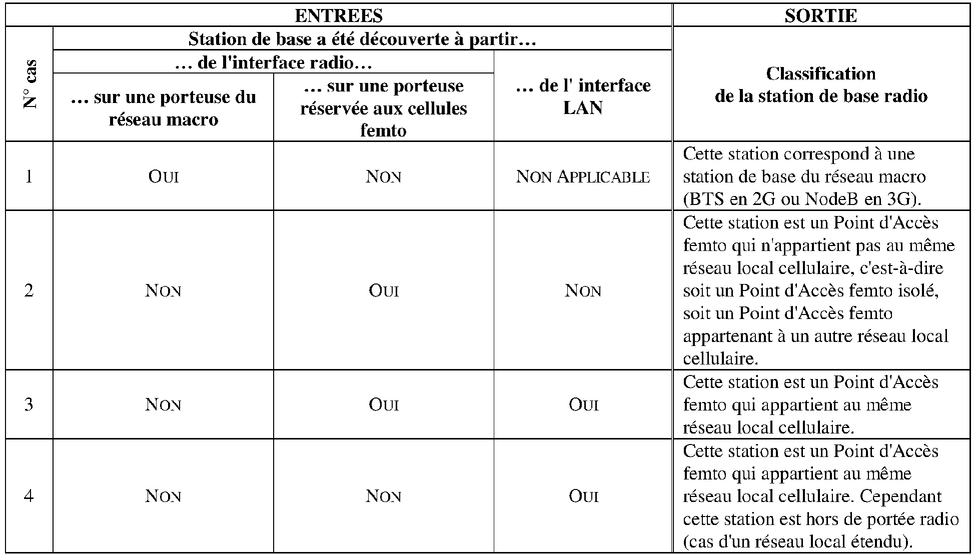

### ANNEXE B

| **Elément d'information tel que décrit dans le document TS25.331 du 3GPP** | **Point d'accès femto source Information de cellule** (une par message d'identification) | | **Information propre à un point d'accès voisin** (de 0 à n par message d'identification) | |
|---|---|---|---|---|
| | 2G | 3G | 2G | 3G |
| Identifiant PLMN (PLMN identity) | Mandatory | Mandatory | - | - |
| Indentifiant de cellule (Cell identity) | Mandatory | Mandatory | Mandatory | Mandatory |
| LAC | optionnel | optionnel | Mandatory (*) | Mandatory (*) |
| UARFCN | - | Mandatory | - | Mandatory |
| Code d'embrouillage (scrambling code) | - | Mandatory | - | Mandatory |
| ARFCN | Mandatory | - | Mandatory | - |
| BSIC | Mandatory | - | Mandatory | - |
| Longueur (bytes) | 18 to 22 | 19 to 23 | 18 to 22 | 19 to 23 |

### ANNEXE C

| **Elément d'information tel que décrit dans le document TS25.331 du 3GPP** | **Description** | **Codage** | **Valeur longueur (octets)** | **Longueur Totale (octets)** |
|---|---|---|---|---|
| PLMN (Public Land Mobile Network) identity | Identifie le réseau mobile de rattachement de la cellule femto. Cette information permet d'éviter toute erreur de configuration lorsque le LAN du client héberge des points d'accès femto rattachés à des fournisseurs de services pour cellules-femto différents. | Valeur de codage sur 20-or 24-bit pour une information broadcastée via... | 3 | 5 |
| | | ... pour le 3G: canal BCCH/BCH, SIB maître message... | | |
| | | ... et pour le 2G: canal BCCH, message SI type 4, identification de la zone de localisation, valeurs MCC and MNC. | | |
| Cell identity | Permet d'identifier sans ambigüité une cellule au sein du PLMN | Valeur de codage sur 28-bit pour une information broadcastée via... | 4 | 6 |
| | | ... pour le 3G: canal BCCH/BCH, message SIB de type 3 | | |
| | | ...et pour le 2G: canal BCCH, message SI de type 3. | | |
| | | 4 bits additionnels 0000. | | |
| LAC (Location Area Code) | Identifie de façon unique une zone de localisation au sein du PLMN. | Codage sur 16-bits pour une information broadcastée via... | 2 | 4 |
| | | ... pour le 3G: canal BCCH/BCH channel, message SIB type 1, CN common GSM-MAP NAS system information... | | |
| | | ...et pour le 2G: canal BCCH, message SI de type 4, Identifiant de zone de localisation, Code de localisation de zone | | |
| UARFCN (UTRAN Absolute Radio Frequency Channel Number) | Permet d'identifier la porteuse radio de la cellule dans le cas d'une cellule 3G. | Codage entier (de 0 à 16383) lorsque l'information est broadcastée via le canal BCCH/BCH, message SIB type 11, information de fréquence / UARFCN downlink. | 2 | 4 |
| Scrambling Code | Dans le cas d'une cellule 3G, permet d'identifier le code d'embrouillage primaire portant le canal P-CCPCH | Codage entier (de 0 à 511) lorsque l'information est broadcastée via le canal BCCH/BCH, message SIB type 11, Information CPICH / Code d'embrouillage initial | 2 | 4 |
| ARFCN (Absolute Radio Frequency Channel Number) | Permet d'identifier la porteuse radio supportant le canal BCCH dans le cas d'un point d'accès 2G. | Code entier (0 à 1023) lorsque l'information est broadcastée via le canal BCCH/BCH, message SIB type 11, liste d'informations cellule Inter-RAT / BCCH ARFCN. | 2 | 4 |
| BSIC (Base Station Identity Code) | Permet d'identifier le code de couleur utilisé pour distinguer entre deux BTS qui utilisent la même fréquence pour supporter le canal BCCH. | Base Station Colour Code (BCC) Network Colour Code (NCC) | 1 | 3 |

Les longueurs totales sont données à titre indicatif en considérant un codage de type TLV, soit "Type-Longueur-Valeur".

## Revendications

1. Procédé de configuration d'un réseau local cellulaire comprenant une pluralité de points d'accès de type cellule femto, chaque point d'accès comprenant une interface LAN d'accès audit réseau local cellulaire, et une interface radio mobile adaptée pour accéder à un réseau mobile d'opérateur, le procédé étant **caractérisé en ce qu'**il comprend, à chaque activation d'un nouveau point d'accès appartenant à la pluralité de point d'accès, des étapes de :
- réception, sur l'interface LAN du nouveau point d'accès activé, d'au moins un message d'identification diffusé à intervalles de temps réguliers à un ensemble de points d'accès actifs de la pluralité de points d'accès, par au moins un point d'accès voisin dudit nouveau point d'accès activé ;
- identification (300) d'au moins un point d'accès voisin du nouveau point d'accès activé, à partir d'au moins un dit message d'identification reçu sur l'interface LAN du nouveau point d'accès activé ;
- diffusion (303) à intervalles de temps réguliers via au moins l'interface LAN du nouveau point d'accès activé, d'au moins un message d'identification représentatif de l'identité du nouveau point d'accès activé, à destination des points d'accès actifs du réseau local cellulaire.

2. Procédé selon la revendication 1, **caractérisé en ce qu'**un message d'identification d'un point d'accès actif pouvant être reçu simultanément sur l'interface LAN et sur l'interface radio mobile du nouveau point d'accès activé, ledit procédé comprend une étape complémentaire de comparaison (301) du canal radio d'émission propre à un message d'identification reçu sur l'interface radio mobile, avec un ensemble de canaux radio prédéterminés propre au déploiement des cellules femto.

3. Procédé selon la revendication 2, **caractérisé en ce que** la diffusion des messages d'identification entre les points d'accès actifs de la pluralité de points d'accès tient compte d'une adresse de groupe du type multipoints, définie dans une plage prédéterminée d'adresses accessibles à l'intérieur dudit réseau local cellulaire.

4. Procédé selon la revendication 3, **caractérisé en ce que** ladite adresse de groupe multipoints est une adresse IP comprise entre l'adresse 224.0.0.0 incluse et l'adresse 224.0.0.255 incluse.

5. Procédé selon la revendication 3, **caractérisé en ce qu'**un message d'identification se présente sous la forme d'au moins un paquet de données structuré du type datagramme IP multicast.

6. Procédé selon la revendication 5, **caractérisé en ce que** ledit au moins un datagramme IP multicast comportant un champ d'information représentatif d'une durée de vie, la valeur de ce champ d'information est fixée à « 1 ».

7. Procédé selon la revendication 5, **caractérisé en ce que** ledit au moins un datagramme IP multicast comporte un champ d'information représentatif d'une durée de vie de valeur fixée à « 255 » et **en ce que** ledit procédé met en oeuvre une étape supplémentaire de filtrage sur cette valeur de champ de durée de vie.

8. Procédé selon la revendication 1, **caractérisé en ce qu'**il comprend, pour chaque point d'accès actif du réseau local cellulaire, une étape (302) de mise à jour d'une liste de tous les points d'accès actifs voisins du point d'accès actif, identifiés à ladite étape d'identification (300) et appartenant au même réseau local cellulaire.

9. Procédé selon la revendication 8, **caractérisé en ce que** la liste de points d'accès actifs voisins, propre à un point d'accès actif donné dudit réseau local cellulaire, est stockée dans une zone mémoire dudit point d'accès actif donné.

10. Procédé selon la revendication 8, **caractérisé en ce que** la liste de points d'accès actifs voisins, propre à chaque point d'accès actif donné du réseau local cellulaire, est stockée dans une zone mémoire d'au moins une entité de gestion desdits point d'accès appartenant audit réseau local cellulaire.

11. Procédé selon la revendication 1, 3 ou 8, **caractérisé en ce que** tout point d'accès actif dudit réseau local cellulaire diffusant en continu et à intervalles de temps réguliers un message d'identification sur ladite adresse de groupe multipoints, si un message d'identification propre à un premier point d'accès appartenant à une liste de voisins d'un deuxième point d'accès, n'a pas été détecté pendant un nombre de fois prédéterminé par ledit deuxième point d'accès sur l'une au moins de ses interfaces LAN ou radio mobile, alors ledit premier point d'accès est retiré de la liste des voisins actifs du deuxième point d'accès.

12. Procédé selon la revendication 2, **caractérisé en ce qu'**un dit message d'identification comporte au moins un champ d'information représentatif d'une localisation d'au moins une station de base de type 2G ou 3G propre à un réseau macro situé au voisinage dudit réseau local cellulaire

13. Système de configuration d'un réseau local cellulaire comprenant une pluralité de points d'accès de type cellules femto, comportant chacun une interface LAN d'accès audit réseau local cellulaire et une interface radio mobile adaptée pour accéder à un réseau mobile d'opérateur, lesdits point d'accès étant adaptés pour communiquer entre eux;
ledit système étant **caractérisé en ce qu'**il comprend:
- des moyens d'activation d'un nouveau point d'accès appartenant à ladite pluralité de point d'accès ;
- des moyens de diffusion d'au moins un point d'accès voisin actif du nouveau point d'accès activé, d'au moins un message d'identification diffusé à intervalles de temps réguliers à un ensemble de points d'accès actifs de la pluralité de points d'accès,
- des moyens de réception, sur l'interface LAN du nouveau point d'accès activé, dudit au moins un message d'identification diffusé;
- des moyens d'identification d'au moins un point d'accès voisin du nouveau point d'accès activé, à partir d'au moins un dit message d'identification reçu sur l'interface LAN du nouveau point d'accès activé;
- des moyens de diffusion, à intervalles de temps réguliers, via au moins l'interface LAN du nouveau point d'accès activé, d'au moins un message d'identification représentatif de l'identité du nouveau point d'accès activé, à destination des points d'accès actifs du réseau local cellulaire.

14. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution sur un nouveau point d'accès d'un procédé de configuration d'un réseau local cellulaire comprenant une pluralité de points d'accès comportant chacun une interface LAN d'accès audit réseau local cellulaire et une interface radio mobile adaptée pour accéder à un réseau mobile d'opérateur, selon les étapes exécutées par un nouveau point d'accès comme définit dans au moins une des revendications 1 à 12, lorsque ledit programme est exécuté sur le nouveau point d'accès.

## Patentansprüche

1. Konfigurationsverfahren eines lokalen zellularen Netzes, das eine Vielzahl von Zugangspunkten der Art Femto-Zelle enthält, wobei jeder Zugangspunkt eine LAN-Schnittstelle für den Zugang zum lokalen zellularen Netz und eine Mobilfunkschnittstelle enthält, die geeignet ist, auf ein Betreiber-Mobilfunknetz zuzugreifen, wobei das Verfahren **dadurch gekennzeichnet ist, dass** es bei jeder Aktivierung eines neuen Zugangspunkts, der zur Vielzahl von Zugangspunkten gehört, Schritte enthält:
- des Empfangs an der LAN-Schnittstelle des aktivierten neuen Zugangspunkts mindestens einer Identifikationsnachricht, die in regelmäßigen Zeitabständen an eine Einheit von aktiven Zugangspunkten der Vielzahl von Zugangspunkten ausgesendet wird, durch mindestens einen dem aktivierten neuen Zugangspunkt benachbarten Zugangspunkt;
- der Identifikation (300) mindestens eines dem aktivierten neuen Zugangspunkt benachbarten Zugangspunkts, ausgehend von mindestens einer an der LAN-Schnittstelle des aktivierten neuen Zugangspunkts empfangenen Identifikationsnachricht;
- des Aussendens (303) in regelmäßigen Zeitabständen über mindestens die LAN-Schnittstelle des aktivierten neuen Zugangspunkts mindestens einer Identifikationsnachricht, die für die Identität des aktivierten neuen Zugangspunkts repräsentativ ist, an die aktiven Zugangspunkte des lokalen zellularen Netzes.

2. Verfahren nach Anspruch 1, **dadurch gekennzeichnet, dass**, da eine Identifikationsnachricht eines aktiven Zugangspunkts gleichzeitig an der LAN-Schnittstelle und an der Mobilfunkschnittstelle des aktivierten neuen Zugangspunkts empfangen werden kann, das Verfahren einen komplementären Schritt des Vergleichs (301) des Sendefunkkanals, der einer an der Mobilfunkschnittstelle empfangenen Identifikationsnachricht eigen ist, mit einer Einheit von vorbestimmten Funkkanälen enthält, die der Ausbreitung der Femto-Zellen eigen ist.

3. Verfahren nach Anspruch 2, **dadurch gekennzeichnet, dass** die Aussendung der Identifikationsnachrichten zwischen den aktiven Zugangspunkten der Vielzahl von Zugangspunkten eine Gruppenadresse der Art Mehrpunkt berücksichtigt, die in einem vorbestimmten Bereich von Adressen definiert ist, die innerhalb des lokalen zellularen Netzes zugänglich sind.

4. Verfahren nach Anspruch 3, **dadurch gekennzeichnet, dass** die Mehrpunkt-Gruppenadresse eine IP-Adresse ist, die zwischen der Adresse 224.0.0.0 einschließlich und der Adresse 224.0.0.255 einschließlich liegt.

5. Verfahren nach Anspruch 3, **dadurch gekennzeichnet, dass** eine Identifikationsnachricht in Form mindestens eines strukturierten Datenpakets der Art Multicast-IP-Datagramm vorliegt.

6. Verfahren nach Anspruch 5, **dadurch gekennzeichnet, dass**, da das mindestens eine IP-Multicast-Datagramm ein für eine Lebensdauer repräsentatives Informationsfeld aufweist, der Wert dieses Informationsfelds auf « 1 » festgelegt wird.

7. Verfahren nach Anspruch 5, **dadurch gekennzeichnet, dass** das IP-Multicast-Datagramm ein für eine Lebensdauer eines auf « 255 » festgelegten Werts repräsentatives Informationsfeld aufweist, und dass das Verfahren einen zusätzlichen Filterschritt an diesen Lebensdauerfeldwert anwendet.

8. Verfahren nach Anspruch 1, **dadurch gekennzeichnet, dass** es für jeden aktiven Zugangspunkt des lokalen zellularen Netzes einen Schritt (302) der Aktualisierung einer Liste aller dem aktiven Zugangspunkt benachbarten aktiven Zugangspunkte enthält, die im Identifikationsschritt (300) identifiziert werden und zum gleichen lokalen zellularen Netz gehören.

9. Verfahren nach Anspruch 8, **dadurch gekennzeichnet, dass** die Liste von benachbarten aktiven Zugangspunkten, die einem gegebenen aktiven Zugangspunkt des lokalen zellularen Netzes eigen ist, in einer Speicherzone des gegebenen aktiven Zugangspunkts gespeichert wird.

10. Verfahren nach Anspruch 8, **dadurch gekennzeichnet, dass** die Liste von benachbarten aktiven Zugangspunkten, die jedem gegebenen aktiven Zugangspunkt des lokalen zellularen Netzes eigen ist, in einer Speicherzone mindestens einer Verwaltungsentität der Zugangspunkte gespeichert wird, die zum lokalen zellularen Netz gehören.

11. Verfahren nach Anspruch 1, 3 oder 8, **dadurch gekennzeichnet, dass**, da jeder aktive Zugangspunkt des lokalen zellularen Netzes kontinuierlich und in regelmäßigen Zeitabständen eine Identifikationsnachricht an der Mehrpunkt-Gruppenadresse aussendet, wenn eine Identifikationsnachricht, die einem ersten Zugangspunkt eigen ist, der zu einer Liste von Nachbarn eines zweiten Zugangspunkts gehört, nicht mit einer vorbestimmten Häufigkeit durch den zweiten Zugangspunkt an mindestens einer seiner LAN- oder Mobilfunkschnittstellen erfasst wurde, der erste Zugangspunkt aus der Liste der aktiven Nachbarn des zweiten Zugangspunkts entfernt wird.

12. Verfahren nach Anspruch 2, **dadurch gekennzeichnet, dass** eine Identifikationsnachricht mindestens ein Informationsfeld aufweist, das für eine Lokalisierung mindestens einer Basisstation des Typs 2G oder 3G repräsentativ ist, die einem Makro-Netz eigen ist, das sich in der Nähe des lokalen zellularen Netzes befindet.

13. Konfigurationssystem eines lokalen zellularen Netzes, das eine Vielzahl von Zugangspunkten der Art Femto-Zellen enthält, die je eine LAN-Schnittstelle für den Zugang zum lokalen zellularen Netz und eine Mobilfunkschnittstelle aufweisen, die geeignet ist, auf ein Betreiber-Mobilfunknetz zuzugreifen, wobei die Zugangspunkte geeignet sind, miteinander zu kommunizieren;
wobei das System **dadurch gekennzeichnet ist, dass** es enthält:
- Einrichtungen zur Aktivierung eines neuen Zugangspunkts, der zur Vielzahl von Zugangspunkten gehört;
- Einrichtungen zur Aussendung von mindestens einem dem aktivierten neuen Zugangspunkt benachbarten aktiven Zugangspunkt mindestens einer Identifikationsnachricht, die in regelmäßigen Zeitabständen an eine Einheit von aktiven Zugangspunkten der Vielzahl von Zugangspunkten ausgesendet wird,
- Einrichtungen zum Empfang, an der LAN-Schnittstelle des aktivierten neuen Zugangspunkts, der mindestens einen ausgesendeten Identifikationsnachricht;
- Einrichtungen zur Identifizierung mindestens eines dem aktivierten neuen Zugangspunkt benachbarten Zugangspunkts ausgehend von mindestens einer an der LAN-Schnittstelle des aktivierten neuen Zugangspunkts empfangenen Identifikationsnachricht;
- Einrichtungen zur Aussendung, in regelmäßigen Zeitabständen, über mindestens die LAN-Schnittstelle des aktivierten neuen Zugangspunkts, mindestens einer Identifikationsnachricht, die für die Identität des aktivierten neuen Zugangspunkts repräsentativ ist, an die aktiven Zugangspunkte des lokalen zellularen Netzes.

14. Computerprogrammprodukt, das von einem Kommunikationsnetz heruntergeladen und/oder auf einem computerlesbaren Träger gespeichert und/oder von einem Mikroprozessor ausgeführt werden kann, **dadurch gekennzeichnet, dass** es Programmcodeanweisungen zur Ausführung an einem neuen Zugangspunkt eines Konfigurationsverfahrens eines lokalen zellularen Netzes enthält, das eine Vielzahl von Zugangspunkten enthält, die je eine LAN-Schnittstelle für den Zugang zum lokalen zellularen Netz und eine Mobilfunkschnittstelle enthalten, die geeignet ist, auf ein Betreiber-Mobilfunknetz zuzugreifen, gemäß den Schritten, die von einem neuen Zugangspunkt ausgeführt werden, wie in mindestens einem der Ansprüche 1 bis 12 definiert, wenn das Programm am neuen Zugangspunkt ausgeführt wird.

## Claims

1. Method for configuring a local cellular network comprising a plurality of femtocell type access points, each access point comprising a LAN interface for accessing said local cellular network, and a mobile radio interface suitable for accessing an operator's mobile network, the method being **characterized in that** it comprises, at each activation of a new access point belonging to the plurality of access points, steps of:
- receiving, on the LAN interface of the new activated access point, at least one identification message broadcast at regular time intervals to a set of active access points of the plurality of access points, by at least one neighbouring access point of said new activated access point;
- identifying (300) at least one neighbouring access point of the new activated access point, from at least one said identification message received on the LAN interface of the new activated access point;
- broadcasting (303) at regular time intervals via at least the LAN interface of the new activated access point, at least one identification message representative of the identity of the new activated access point, destined for the active access points of the local cellular network.

2. Method according to Claim 1, **characterized in that** an identification message of an active access point being capable of being received simultaneously on the LAN interface and on the mobile radio interface of the new activated access point, said method comprises a complementary step of comparing (301) the transmitting radio channel specific to an identification message received on the mobile radio interface, with a set of predetermined radio channels specific to the deployment of the femtocells.

3. Method according to Claim 2, **characterized in that** broadcasting the identification messages between the active access points of the plurality of access points allows for a multipoint type group address, defined within a predetermined range of accessible addresses within said local cellular network.

4. Method according to Claim 3, **characterized in that** said multipoint group address is an IP address between the address 224.0.0.0 inclusive and the address 224.0.0.255 inclusive.

5. Method according to Claim 3, **characterized in that** an identification message is in the form of at least one structured data packet of the multicast IP datagram type.

6. Method according to Claim 5, **characterized in that** said at least one multicast IP datagram comprising an information field representative of a lifetime, the value of this information field is set to "1".

7. Method according to Claim 5, **characterized in that** said at least one multicast IP datagram comprises an information field representative of a lifetime with a value set to "255" and that said method implements an additional filtering step on this lifetime field value.

8. Method according to Claim 1, **characterized in that** it comprises, for each active access point of the local cellular network, a step (302) of updating a list of all the neighbouring active access points of the active access point, identified in said identification step (300) and belonging to the same local cellular network.

9. Method according to Claim 8, **characterized in that** the list of neighbouring active access points, specific to a given active access point of said local cellular network, is stored in a memory area of said given active access point.

10. Method according to Claim 8, **characterized in that** the list of neighbouring active access points, specific to each given active access point of the local cellular network, is stored in a memory area of at least one entity for managing said access points belonging to said local cellular network.

11. Method according to Claim 1, 3 or 8, **characterized in that** with any active access point of said local cellular network continuously broadcasting an identification message at regular time intervals on said multipoint group address, if an identification message specific to a first access point belonging to a list of neighbours of a second access point, has not been detected for a predetermined number of times by said second access point on at least one of its LAN or mobile radio interfaces, then said first access point is removed from the list of active neighbours of the second access point.

12. Method according to Claim 2, **characterized in that** a said identification message comprises at least one information field representative of a location of at least one 2G or 3G type base station specific to a macro network located in the neighbourhood of said local cellular network.

13. System for configuring a local cellular network comprising a plurality of femtocell type access points, each comprising a LAN interface for accessing said local cellular network and a mobile radio interface suitable for accessing an operator's mobile network, said access points being suitable for communicating with each other:
said system being **characterized in that** it comprises:
- means of activating a new access point belonging to said plurality of access points;
- means of broadcasting, of at least one active neighbouring access point of the new activated access point, at least one identification message broadcast at regular intervals to a set of active access points of the plurality of access points;
- means of receiving, on the LAN interface of the new activated access point, said at least one broadcast identification message;
- means of identifying at least one neighbouring access point of the new activated access point, from at least one said identification message received on the LAN interface of the new activated access point;
- means of broadcasting, at regular time intervals, via at least the LAN interface of the new activated access point, at least one identification message representative of the identity of the new activated access point, destined for the active access points of the local cellular network.

14. Computer program product downloadable from a communication network and/or stored on a computer readable medium and/or executable by a microprocessor, **characterized in that** it comprises program code instructions for the execution on a new access point of a method for configuring a local cellular network comprising a plurality of access points each comprising a LAN interface for accessing said local cellular network and a mobile radio interface suitable for accessing an operator's mobile network, according to the steps executed by a new access point as defined in at least one of Claims 1 to 12, when said program is executed on the new access point.
